Europäisches Patentamt

European Patent Office

Office européen des brevets

(19)

(11) EP 0 556 108 B1

(12) FASCICULE DE BREVET EUROPEEN

(45) Date de publication et mention
de la délivrance du brevet:
**15.10.1997 Bulletin 1997/42**

(51) Int Cl.6: **C10G 49/04**, B01J 29/04,
C10G 49/08, B01J 29/82,
B01J 29/84

(21) Numéro de dépôt: **93400310.4**

(22) Date de dépôt: **08.02.1993**

(54) **Utilisation d'un catalyseur comprenant un phosphate de gallium en hydroraffinage de charges pétrolières hydrocarbonées**

Anwendung eines Galliumphosphat enthaltenden Katalysators in dem Hydroraffinationsverfahren eines Kohlenwasserstoffeinsatzes

Use in a hydrocarboneous charge hydrorefining process of a gallium phosphate containing catalyst

(84) Etats contractants désignés:
**BE DE ES GB IT NL**

(30) Priorité: **12.02.1992 FR 9201662**

(43) Date de publication de la demande:
**18.08.1993 Bulletin 1993/33**

(73) Titulaire: **INSTITUT FRANCAIS DU PETROLE**
**92502 Rueil-Malmaison (FR)**

(72) Inventeurs:
• **Guth, Jean-Louis**
  **F-68200 Mulhouse (FR)**
• **Kessler, Henri**
  **F-68270 Wittenheim (FR)**
• **Mignard, Samuel**
  **F-78400 Chatou (FR)**
• **Kasztelan, Slavik**
  **F-92500 Rueil Malmaison (FR)**

(56) Documents cités:
**EP-A- 0 158 350**        **EP-A- 0 292 030**
**EP-A- 0 434 052**        **EP-A- 0 469 951**
**FR-A- 2 044 417**

## Description

La présente invention concerne l'utilisation en hydroraffinage de charges hydrocarbonées d'un catalyseur comprenant un phosphate de gallium substitué, associé à une matrice habituellement amorphe ou mal cristallisée, éventuellement à une zéolithe Y de structure faujasite, et à au moins un métal du groupe VI de la classification périodique des éléments et/ou au moins un métal du groupe VIII de ladite classification (Handbook of Chemistry and Physics, 64ème édition, 1983-1984, intérieur 1ère page couverture). La présente invention concerne plus particulièrement l'utilisation dudit catalyseur pour l'hydrogénation, l'hydrodésazotation et l'hydrodésulfuration de coupes pétrolières contenant des composés aromatiques, de l'azote et du soufre.

L'hydrotraitement des coupes pétrolières soufrées prend une importance de plus en plus grande dans la pratique du raffinage avec la nécessité croissante de conversion des fractions lourdes en fractions plus légères valorisables en tant que carburants.

Cet état de fait tient d'une part à l'intérêt économique de valoriser au mieux des bruts importés de plus en plus riches en fractions lourdes et d'autre part au déficit relatif en hydrogène de ces fractions lourdes et à leur richesse en hétéro-atomes, dont l'azote et le soufre, par rapport aux spécifications imposées dans les divers pays pour les carburants commerciaux.

Cette valorisation implique une réduction relativement importante du poids moléculaire des constituants lourds, qui peut être obtenue par exemple au moyen de réactions de craquage.

Les procédés de craquage les plus performants mis en oeuvre actuellement sont des procédés catalytiques tel que par exemple le craquage catalytique en lit fluide (F.C.C.) et l'hydrocraquage catalytique.

Ces deux procédés mettent en oeuvre des catalyseurs de nature essentiellement acide, vis-à-vis desquels les composés hétérocycliques azotés rencontrés dans les fractions lourdes se comportent comme des poisons à la toxicité très marquée.

En conséquence, la désazotation des charges de craquage et d'hydrocraquage catalytiques constitue un des moyens possibles pour améliorer le rendement global de ces procédés, et il est alors souhaitable de diminuer au maximum la teneur en azote des charges avant de les craquer.

Les procédés actuels d'hydroraffinage catalytique utilisent des catalyseurs capables de promouvoir les principales réactions utiles à la mise en valeur des coupes lourdes, en particulier l'hydrogénation des noyaux aromatique (HAR), l'hydrodésulfuration (HDS) l'hydrodésazotation (HDN) et autres hydroéliminations d'hétéro-atomes. A ce titre, au moins une étape d'hydroraffinage est habituellement intégrée dans chacun des schémas connus de valorisation des coupes pétrolières lourdes.

L'hydroraffinage est employé pour traiter des charges telles que les essences, les gasoils, les gasoils sous vide, les résidus atmosphériques ou sous-vide, désasphaltés ou non. Par exemple, il est tout indiqué pour le prétraitement des charges des procédés de craquage et d'hydrocraquage catalytiques.

L'influence de cet hydrotraitement préalable sur le rendement global et la durée de vie du catalyseur de craquage et/ou d'hydrocraquage est d'autant plus important que l'on dispose de catalyseurs d'hydrotraitements plus actifs en hydrodésazotation, en hydrodésulfuration et en hydrogénation.

Le contexte de la présente invention, résumé ci-avant, est bien connu de l'homme du métier. On trouvera par exemple une analyse détaillée de ce contexte dans Oil & Gas Journal, le 16 février 1987, pages 55 à 66, Van Kessel et al.

Les catalyseurs utilisés en hydroraffinage associent un support de grande surface ($150$ à $800\ m^2.g^{-1}$ généralement) présentant une acidité superficielle faible et une fonction hydrogénante apportée par au moins un métal du groupe VI de la classification périodique tel que chrome, molybdène ou tungstène et/ou au moins un métal du groupe VIII tel que fer, cobalt, nickel, ruthénium, rhodium, palladium, osmium, iridium ou platine.

Lesdits catalyseurs peuvent également éventuellement contenir au moins un élément choisi dans le groupe (P, Si, B, F).

Dans les supports peu acides, on trouve la famille des alumines, des silices et silice-alumines amorphes, des oxydes à base de titane ($TiO_2$) et des oxydes à base de zircone ($ZrO_2$).

D'autre part le document EP-A-158.350 divulgue des catalyseurs pur l'utilisation dans un procédé d'hydroraffinage à base d'un silico-alumino-phosphate microporeux cristallisé de formule nR : $(M_w\ Al_x\ P_y$-$Si_z)\ O_2$.

Les importants travaux de recherche effectués par le demandeur sur de nombreuses zéolithes et solides microporeux cristallisés, tels les phosphates d'aluminium et les phosphates de gallium substitués, l'ont conduit à découvrir que, de façon surprenante, un catalyseur comprenant un phosphate de gallium microporeux cristallisé éventuellement substitué avec un hétéroatome choisi dans le groupe constitué par les éléments : Li, Be, Co, Mg, Mn, Zn, Al, B, Cr, Fe, Ge, Si, Ti, As, et V, éventuellement une zéolithe Y de structure faujasite, et comprenant au moins un métal actif éventuellement dopé par un autre métal, présente une activité en hydrogénation des hydrocarbures aromatiques et en hydrodésazotation et en hydrodésulfuration plus importante que les formules catalytiques décrites ci-dessus, et présente également une activité importante en craquage. Sans vouloir être lié par une quelconque théorie, il semble que cette activité particulièrement élevée des catalyseurs utilisés selon la présente invention est due aux propriétés particulières du silico-phosphate de gallium, permettant une amélioration des propriétés hydrogénante, hydrodésulfurante et d'hydrodésazotante des métaux utilisés habituellement dans les réactions d'hydroraffinage.

L'identification du phosphate de gallium cristallisé microporeux se fait de manière commode à partir de son diagramme de diffraction des rayons X. Ce diagramme est obtenu à l'aide d'un diffractomètre en utilisant la méthode classique des poudres avec le rayonnement K alpha du cuivre. A partir de la position des pics de diffraction représentée par l'angle $2\theta$, on calcule. par la relation de Bragg, les équidistances réticulaires $d_{hkl}$ caractéristiques de l'échantillon.

L'estimation de l'erreur de mesure $\Delta(d_{hkl})$ sur dhkl se calcule en fonction de l'erreur absolue $\Delta(2\theta)$ affectée à la mesure de $2\theta$ par la relation de Bragg. Une erreur absolue $\Delta(2\theta)$ égale à $\pm 0,05°$ est communément admise. L'intensité $I_{rel}$ affectée à chaque valeur de $d_{hkl}$ est mesurée d'après la hauteur du pic de diffraction correspondant.

Le dépouillement du diagramme de diffraction des rayons X présenté dans le tableau 1 de la présente description est représentatif du diagramme de diffraction du phosphate de gallium et de ses dérivés substitués.

Le phosphate de gallium et ses dérivés substitués utilisés dans la présente invention sont caractérisés par :

a) la formule générale approchée suivante :

$$R_r \, Ga_g \, P_p \, X_x \, O_2 \, F_f, \, h \, H_2O$$

où la somme de g. p et x est égale à 1, et où :

g est un nombre compris entre 0,3 et 0,5, et de préférence entre 0,4 et 0,5,
p est un nombre compris entre 0,3 et 0,5.
x est un nombre compris entre 0 et 0,4, et de préférence entre 0 et 0,2.
r est un nombre compris entre 0,01 et 0,2,
f est un nombre compris entre 0,01 et 0,2,
h varie suivant le degré d'hydratation du solide entre 0 et 0,5,
R est un composé organique. choisi dans le groupe formé par les amines cycliques. de préférence la quinuclidine.
X est un hétéroatome choisi dans le groupe formé par les éléments : Li, Be, Co, Mg, Mn, Zn. Al, B, Cr. Fe, Ge, Si, Ti, As, et V, de préférence Si,

b) un diagramme de diffraction des rayons X représenté dans le tableau 1.

## TABLEAU 1

| $2\theta$ (°) | $d_{hkl}$ (Å) | $I_{rel}$ |
|---|---|---|
| 3,4 - 3,6 | 25,9-24,5 | mf à m |
| 4,7-4,9 | 18,7-18,0 | f à mf |
| 5,9 - 6,1 | 14,9 - 14,4 | mf à m |
| 6,8 - 7,0 | 12,9-12,6 | f à mf |
| 7,4-7,6 | 11,9-11,6 | tf à f |
| 8,2-8,3 | 10,7-10,6 | mf à m |
| 8,3-8,6 | 10,6-10,5 | tf àf |
| 9,6-9,8 | 9,7-9,12 | TF |
| 10,1-10,3 | 8,75-8,58 | m à F |
| 11,3-11,5 | 7,82-7,68 | tf à f |
| 11,8-12 | 7,49-7,36 | mf à mF |
| 12,3-12,5 | 7,18-7,07 | tf à f |
| 12,8-13,0 | 6,91-6,80 | tf à f |
| 13,6-13,8 | 6,50-6,41 | f à mf |
| 14-14,2 | 6,32-6,23 | m à mF |
| 14,4-14,6 | 6,14-6,06 | tf à f |
| 15,2-15,4 | 5,82-5,74 | tf à f |
| 15,6-15,8 | 5,67-5,60 | tf à f |
| 16-16,2 | 5,53-5,46 | tf à f |
| 16,7-16,9 | 5,30-5,24 | tf à f |
| 17-17,2 | 5,21-5,15 | tf à f |
| 17,4-17,6 | 5,09-5,03 | tf à f |
| 17,7-17,9 | 5,00-4,95 | tf à f |

| | | |
|---|---|---|
| 18,4-18,6 | 4,81-4,76 | f à mf |
| 18,7-18,9 | 4,74-4,69 | tf à f |
| 19,4-19,6 | 4,57-4,52 | tf à f |
| 19,6-19,8 | 4,52-4,48 | tf à f |
| 20,5-20,7 | 4,32-4,28 | mf à mF |
| 20,8-21,0 | 4,26-4,22 | tf à f |
| 21,1-21,3 | 4,20-4,16 | f à mf |
| 21,4-21,6 | 4,14-4,11 | tf à f |
| 21,7-21,9 | 4,09-4,05 | tf à f |
| 22,0-22,2 | 4,03-4,00 | tf à f |
| 22,3-22,4 | 3,98-3,95 | tf à f |
| 22,4-22,6 | 3,95-3,93 | tf à f |
| 22,7-22,9 | 3,91-3,88 | tf à f |
| 23,0-23,2 | 3,86-3,83 | tf à f |
| 23,3-23,5 | 3,81-3,78 | tf à f |
| 23,9-24,1 | 3,71-3,68 | f à mf |
| 24,2-24,4 | 3,67-3,64 | f à mf |
| 24,5-24,7 | 3,63-3,60 | f à mf |
| 24,8-25,0 | 3,58-3,55 | f à mf |
| 25,0-25,2 | 3,55-3,53 | tf à f |
| 25,3-25,5 | 3,51-3,49 | tf à f |
| 25,6-25,8 | 3,47-3,45 | tf à f |
| 25,9-26,1 | 3,43-3,41 | f à mf |
| 26,4-26,6 | 3,37-3,34 | f à mf |
| 27,1-27,2 | 3,29-3,27 | f à mf |

| | | |
|---|---|---|
| 27,6-27,8 | 3,22-3,20 | tf à f |
| 27,9-28,10 | 3,19-3,17 | tf à f |
| 28,4-28,6 | 3,13-3,11 | f à mf |
| 28,7-28,9 | 3,10-3,08 | mf à mF |
| 29,2-29,4 | 3,05-3,03 | tf à f |
| 29,6-29,8 | 3,01-2,995 | tf à f |
| 30,2-30,4 | 2,956-2,937 | tf à f |
| 30,5-30,7 | 2,928-2,909 | tf à f |
| 31,0-31,2 | 2,882-2,864 | f à mf |
| 32,0-32,2 | 2,794-2,777 | tf à f |
| 32,7-32,9 | 2,736-2,720 | tf à f |
| 33,3-33,5 | 2,688-2,672 | tf à f |
| 34,7-34,9 | 2,582-2,568 | tf à f |
| 35,4-35,6 | 2,533-2,519 | tf à f |
| 38,3-38,5 | 2,348-2,336 | tf à f |
| 43,1-43,3 | 2,096-2,087 | tf à f |
| 44,9-45,1 | 2,017-2,008 | tf à f |
| 48,0-48,2 | 1,893-1,886 | tf à f |

TF : très fort, F : fort, mF : moyen fort, m : moyen, mf : moyen faible, f : faible, tf : très faible.

Le procédé de préparation du phosphate de gallium et de ses dérivés substitués, synthétisés en milieu fluorure, consiste en ce que :

a) on forme un mélange réactionnel qui renferme au moins les composés suivants : l'eau, au moins une source de gallium, au moins une source de phosphore, éventuellement au moins une source d'un hétéroatomc X choisi dans le groupe formé par les éléments : Li, Be, Co, Mg, Mn, Zn, Al, B, Cr, Fe, Ge, Si, Ti, As. et V, de préférence Si, au moins une source d'au moins un composé organique, au moins une source d'anions fluorures et éventuellement au moins une source d'au moins un composé acide ou basique pour ajuster le pH du milieu réactionnel à la valeur désirée, le pH du milieu réactionnel étant compris entre 3 et 8 et ledit mélange réactionnel ayant la composition, en termes de rapport molaire. suivantes :

$$r'R : Ga_2O_3 : p'P_2O_5 : x'XO_{n/2} : f'F : h'H_2O$$

où r' est un nombre compris entre 1 et 10, de préférence entre 5 et 10,
où p' est un nombre compris entre 0,3 et 1, de préférence entre 0,5 et 1.
où x' est un nombre compris entre 0 et 1,5, de préférence entre 0 et 1.
où f est un nombre compris entre 0,1 et 4, de préférence entre 0,3 et 2,
où h' est un nombre compris entre 1 et 500, de préférence entre 30 et 100,
où R est un composé organique, choisi dans le groupe formé par les amines cycliques, de préférence la quinuclidine.
où n est le degré d'oxydation de l'hétéroatome X.

b) on maintient ledit mélange réactionnel à une température de chauffage supérieure à 40°C jusqu'à ce que l'on obtienne un composé cristallin.

Les anions fluorures peuvent être introduits sous forme d'acide fluorhydrique ou de ses sels. Ces sels sont formés avec des métaux alcalins, l'ammonium ou de préférence avec le composé organique utilisé. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau. comme le fluorosilicate d'ammonium $(NH_4)_2SiF_6$ ou de sodium $Na_2SiF_6$; on utilise de préférence le tétrafluorure de silicium $SiF_4$.

Le composé organique est une amine cyclique. On utilise de préférence la quinuclidine.

Parmi les sources de gallium. on peut utiliser les oxydes et hydroxydes de gallium, comme GaOOH, les alkoxydes de gallium de formule $Ga(Or_1)_3$ où $R_1$ est un radical alkyle, les sels de gallium comme le fluorure de gallium, le phosphate de gallium ou le sulfate de gallium. On utilise de préférence le sulfate de gallium.

De nombreuses sources d'hétéroatomes peuvent être employées. Ainsi, dans le cas du silicium, on peut utiliser un hydrogel, un aérogel ou une suspension colloïdale, les oxydes de précipitation, les oxydes provenant de l'hydrolyse d'esters tel que l'orthosilicate d'éthyle $Si(OEt)_4$ ou les oxydes provenant de l'hydrolyse de complexes comme le fluorosilicate d'ammonium $(NH_4)_2SiF_6$ ou le fluorosilicate de sodium $Na_2SiF_6$.

La source de phosphore préférée est l'acide phosphorique $H_3PO_4$, mais ses sels et esters comme les phosphates alcalins, les phosphates de gallium ou les phosphates d'alkyles conviennent également.

Les acides ou sels d'acides, les bases ou sels basiques servant éventuellement à ajuster le pH du milieu réactionnel à la valeur souhaitée peuvent être choisis parmi les acides usuels, tels que par exemple l'acide chlorhydrique, l'acide sulfurique, l'acide nitrique ou l'acide acétique, les sels acides comme l'hydrogénotluorure d'ammonium ou l'hydrogénosulfate de sodium, les bases courantes usuelles comme l'ammoniaque ou l'hydroxyde de sodium et les bases azotées comme la méthylamine. Des mélanges tampons tels que le tampon acétate (acide acétique - acétate de sodium) ou le tampon ammoniacal (ammoniaque - chlorure d'ammonium) conviennent également.

La première étape du procédé de synthèse consiste à réaliser le mélange réactionnel comprenant l'eau, la source de gallium, la source de phosphore, éventuellement la source de l'hétéroatome X, la source d'anions fluorures, le composé organique. éventuellement une source de cations complémentaire pour la composition des charges de la charpente et éventuellement au moins un composé acide ou basique. Le composé organique et le composé acide ou basique sont généralement ajoutés en dernier pour permettre l'ajustement du pH à la valeur désirée.

La seconde étape consiste en la cristallisation du mélange réactionnel formé dans la première étape. Elle s'effectue en chauffant le mélange réactionnel à une température comprise entre 40 et 250°C, de préférence entre 60 et 220°C sous pression autogène. On utilise de préférence un récipient bouché en polypropylène ou un autoclave intérieurement revêtu d'un matériau polymère, en général du polytétrafluoroéthylène, pour les températures inférieures à 100°C et supérieures à 100°C respectivement.

La durée du chauffage du mélange réactionnel nécessaire à la cristallisation dépend de la composition du mélange réactionnel et de la température de réaction.

La taille et la cinétique de formation des cristaux peuvent être modifiées par introduction dans le milieu réactionnel de germes constitués par des cristaux, éventuellement broyés, du phosphate de gallium et éventuellement substitué et par l'agitation en cours de cristallisation.

Après cristallisation, le phosphate de gallium cristallisé microporeux éventuellement substitué est séparé des eaux mères par filtration ou centrifugation, lavé à l'eau distillée et séché à l'air à 40°C. Le solide ainsi obtenu contient occlus dans ses cavités le composé organique introduit dans le milieu réactionnel. Ce dernier est associé d'une part au fluorure et d'autre part joue éventuellement le rôle de cation de compensation de la charge négative de la charpente résultant de l'incorporation éventuelle de l'hétéroatome X dans la charpente cristallisée. En plus du composé organique, le phosphate de gallium éventuellement substitué peut contenir au sein de ses cavités de l'eau d'hydratation et des cations de compensation minéraux si les cations organiques ne sont pas en nombre suffisant. La déshydratation du solide selon l'invention peut être effectuée par chauffage à 150°C.

Le phosphate de gallium éventuellement substitué ainsi préparé peut être débarrassé des composés organiques présents au sein des cavités après l'étape de synthèse par traitement de calcination à une température supérieure à 200°C et de préférence comprise entre 350 et 450°C.

Le catalyseur utilisé selon la présente invention peut renfermer une zéolithe Y de structure faujasite (Zeolite Molecular Sieves Structure, chemistry and uses, D.W. BRECK, J. WILLEY and sons 1973). Parmi les zéolithes Y que l'on peut utiliser, on emploiera de préférence une zéolithe Y stabilisée, couramment appelée ultrastable ou USY soit sous forme au moins partiellement échangée avec des cations métalliques. par exemple des cations des métaux alcalino-terreux et/ou des cations de métaux de terres rares de numéro atomique 57 à 71 inclus, soit sous forme hydrogène.

Le catalyseur utilisé selon la présente invention renferme également au moins une matrice habituellement amorphe ou mal cristallisée choisie par exemple dans le groupe formé par l'alumine, la silice, la magnésie, l'argile, l'oxyde de titane, la zircone, les phosphates d'aluminium, de titane ou de zirconium, les combinaisons de deux au moins de ces composés et les combinaisons alumine-oxyde de bore.

Le catalyseur utilisé selon la présente invention renferme en % poids :

a) de 20 à 95%, de préférence de 30 à 85% et de manière encore plus préférée de 50 à 80% d'au moins une matrice,
b) de 1 à 60%, de préférence de 4 à 50% et de manière encore plus préférée de 10 à 40% d'au moins un phosphate de gallium microporeux cristallisé éventuellement substitué par un élément choisi dans le groupe formé par les éléments : Li, Be, Co, Mg, Mn, Zn, Al, B, Cr. Fe, Ge, Si, Ti , As, et V, de préférence par Si,
c) de 0 à 30%. de préférence de 0 à 20% et de manière encore plus préférée de 0 à 10% d'au moins une zéolithe Y de structure faujasite, forme hydrogène, ayant les caractéristiques données ci-avant,
d) de 0,1 à 30%. de préférence de 0,1 à 20% et de manière encore plus préférée de 0,1 à 10% d'au moins un métal du groupe VI et/ou au moins un métal du groupe VIII.
e) de 0 à 15%, de préférence de 0 à 10% d'au moins un élément choisi dans le groupe formé par Si, P, B et F.

Le catalyseur utilisé selon la présente invention peut être préparé par toutes les méthodes bien connues de l'homme du métier. Une des méthodes préférées consiste à malaxer le phosphate de gallium microporeux cristallisé éventuellement et éventuellement une zéolithe Y dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante telle qu'elle a été définie précédemment (au moins un métal du groupe VIII et/ou au moins un métal du groupe VI), de même que l'élément choisi dans le groupe formé par Si. P, B et F. peuvent être introduits dans le catalyseur à divers niveaux de la préparation et de diverses manières.

La fonction hydrogénante peut être introduite en partie seulement (cas par exemple de l'association d'au moins un métal du groupe VI et d'au moins un métal du groupe VIII) ou en totalité au moment du malaxage du phosphate de gallium microporeux cristallisé éventuellement substitué avec le gel d'oxyde choisi comme matrice.

Ladite fonction peut être introduite par une ou plusieurs opérations d'échange ionique sur le support calciné constitué du phosphate de gallium microporeux cristallisé substitué dispersé dans la matrice choisie, à l'aide d'une solution contenant au moins un sel précurseur de métal du groupe VIII. Elle peut être introduite par au moins une opération d'imprégnation du support mis en forme et calciné. par une solution de précurseur d'au moins un métal du groupe VIII (notamment le cobalt et/ou le nickel) lorsque au moins un précurseur d'au moins un métal du groupe VI (notamment le molybdène ou le tungstène) a été préalablement introduit au moment du malaxage du support dans le cas de l'association d'au moins un métal du groupe VI et d'au moins un métal du groupe VIII. Dans le cas de ladite association, elle peut être introduite par au moins une opération d'imprégnation du support calciné constitué de phosphate de gallium microporeux cristallisé éventuellement substitué et de la matrice, par au moins une solution contenant au moins un précurseur de métal des groupes VI et/ou VIII, tout précurseur de métal du groupe VIII étant de préférence introduit après ou en même temps tout précurseur de métal du groupe VI.

Dans le cas où les métaux sont introduits en plusieurs imprégnations des sels précurseurs correspondants, une étape de calcination intermédiaire du catalyseur devra être effectuée à une température comprise entre 250 et 600°C.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

Le fluor peut être introduit par exemple par imprégnation d'une solution aqueuse d'acide fluorhydrique ou de fluorure d'ammonium.

Le silicium peut être ajouté par exemple par imprégnation de silicate d'éthyle en solution dans un alcool.

Le bore peut être introduit par exemple par une solution d'acide borique dans un alcool.

Les catalyseurs ainsi obtenus sont utilisés pour l'hydroraffinage de coupes pétrolières, et présentent une activité améliorée par rapport à l'art antérieur.

Les charges employées dans le procédé sont des essences, des gas-oils. des gas-oils sous vide, des résidus désasphaltés ou non. Elles contiennent des hétéroatomes tels que soufre et azote. Les conditions de l'hydroraffinage telles que température, pression, taux de recyclage d'hydrogène, vitesse volumique horaire, pourront être très variables en fonction de la nature de la charge, de la qualité des produits désirés et des installations dont dispose le raffineur.

La température est en général supérieure à 230°C et souvent comprise entre 300°C et 450°C. La pression est supérieure à 1 MPa et en général supérieure à 20 MPa. Le taux de recyclage d'hydrogène est au minimum de 100 et souvent compris entre 260 et 3000 litres d'hydrogène par litre de charge. La vitesse volumique horaire est comprise en général entre 0,2 et 10 h$^{-1}$.

Les résultats qui importent au raffineur sont l'activité en HDN et en HDS. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que l'activité peut être augmentée par une élévation de température, mais c'est souvent au détriment de la stabilité du catalyseur.

EP 0 556 108 B1

La stabilité ou durée de vie s'améliore avec une augmentation de la pression ou du taux de recyclage d'hydrogène, mais ceci se fait au détriment de l'économie du procédé.

Les exemples suivants illustrent la présente invention sans toutefois en limiter la portée.

Exemple 1

Préparation du silico-gallophosphate entrant dans la composition des catalyseurs utilisés selon l'invention.

Dans cette préparation, on utilise une source de silice de combustion commercialisée sous le non d'Aerosil par Degussa.

Le sulfate de gallium hydraté est obtenu par dissolution à chaud de gallium, grade 1 de Johnson Matthey, dans de l'acide $H_2SO_4$ concentré en excès, reprise à température ordinaire de la suspension obtenue par l'éthanol à 60% dans l'eau, reprécipitation. dans cette solution refroidie, du sulfate de gallium hydraté par addition d'éther, puis filtration et séchage ménagé.

On dissout, dans 8,5 g d'eau distillée, 6,5 g de sulfate de gallium hydraté (le rapport molaire $H_2O/Ga_2(SO_4)_3$ dans le sel est proche de 25). On ajoute 0,36 g de silice Aérosil puis 6,66 g de quinuclidine. On ajoute sous agitation 2,31 g d'acide phosphorique à 85% (Prolabo) puis 0,5 g d'acide fluorhydrique à 40% (Fluka). On continue l'agitation pendant environ 15 minutes. Le pH du mélange réactionnel ainsi obtenu est égal à 5.

La composition chimique du mélange réactionnel est alors la suivante :

$$6Q : 1\ Ga_2O_3 : 1\ P_2O_5 : 0,6\ SiO_2\ ;\ 1\ HF : 64\ H_2O$$

Le mélange réactionnel obtenu après agitation (pH= 4,5) est placé dans le même type d'autoclave que précédemment et porté à 150°C pendant 24 heures.

Après réaction, le solide entièrement cristallisé est filtré, lavé à l'eau distillée, séché à 40°C. Le spectre de diffraction des rayons X correspond à celui du tableau 1 de la présente description.

L'analyse chimique du solide conduit à la formule suivante pour la forme anhydre et débarrassée du composé organique :

$$Ga_{0,5}\ P_{0,45}\ Si_{0,05}\ O_2$$

Exemple 2

Préparation du catalyseur A.

Le produit tel que décrit dans l'exemple 1 est malaxé avec de l'alumine de type SB3 fournie par la société Condéa. La pâte malaxée est ensuite extrudée à travers une filière de diamètre 1,4 mm. Les extrudés sont imprégnés à sec par une solution d'un mélange d'heptamolybdate d'ammonium, de nitrate de nickel et d'acide orthophosphorique, et enfin calcinés sous air à 550°C in-situ dans le réacteur. Les teneurs pondérales en oxydes actifs sont les suivantes (par rapport au catalyseur) :

| 2,5% en poids d'oxyde de phosphore | $P_2O_5$ |
| 15% en poids d'oxyde de molybdène | $MoO_3$ |
| 5% en poids d'oxyde de nickel | NiO |

Exemple 3

Préparation du catalyseur B.

Le produit tel que décrit dans l'exemple 1 est malaxé avec de l'alumine de type SB3 fournie par la société Condéa. La pâte malaxée est ensuite extrudée à travers une filière de diamètre 1,4 mm. Les extrudés sont imprégnés à sec par une solution d'un mélange d'heptamolybdate d'ammonium, de nitrate de cobalt, et enfin calcinés sous air à 550°C in-situ dans le réacteur. Les teneurs pondérales en oxydes actifs sont les suivantes (par rapport au catalyseur) :

| 16% en poids d'oxyde de molybdène | MoO3 |

(suite)

| 4,5% en poids d'oxyde de cobalt | CoO |
|---|---|

Exemple 4

Préparation du catalyseur C.

Le gel d'alumine utilisé est fourni par la société Condéa sous la référence SB3. Après malaxage, la pâte obtenue est extrudée à travers une filière de diamètre 1,4 mm. Les extrudés sont calcinés puis imprégnés à sec par une solution d'un mélange d'heptamolybdate d'ammonium, de nitrate de nickel et d'acide orthophosphorique, et enfin calcinés sous air à 550°C. Les teneurs pondérales, exprimées en oxydes actifs, sont les suivantes (par rapport au catalyseur) :

| 2,5% en poids d'oxyde de phosphore | $P_2O_5$ |
|---|---|
| 15% en poids d'oxyde de molybdène | $MoO_3$ |
| 5 % en poids d'oxyde de nickel | NiO |

Exemple 5

Préparation du catalyseur D.

Le gel d'alumine utilisé est fourni par la société Condéa sous la référence SB3. Après malaxage, la pâte obtenue est extrudée à travers une filière de diamètre 1,4 mm. Les extrudés sont calcinés puis imprégnés à sec par une solution d'un mélange d'heptamolybdate d'ammonium, de nitrate de nickel et d'acide orthophosphorique, et enfin calcinés sous air à 550°C. Les teneurs pondérales. exprimées en oxydes actifs, sont les suivantes (par rapport au catalyseur) :

| 16% en poids d'oxyde de molybdène | $MoO_3$ |
|---|---|
| 4,5% en poids d'oxyde de cobalt | CoO |

Exemple 6 : Evaluation des catalyseurs A et C dans un test d'hydrodéazotation à 10 MPa.

Les catalyseurs A et C dont les préparations sont décrites dans les exemples précédents sont successivement utilisés dans les conditions de l'hydrodéazotation sur une charge pétrolière de type distillat sous vide dont les principales caractéristiques sont les suivantes :

| point initial | 356°C |
|---|---|
| point 10% | 435°C |
| point 50% | 485°C |
| point 90% | 524°C |
| point final | 566°C |
| densité (20/4) | 0,924 |
| soufre (% poids) | 2,65 |
| azote (ppm poids) | 1250 |

L'unité de test catalytique comprend un réacteur en lit fixe, à circulation ascendante de la charge ("up-flow"), dans lequel est introduit 40 ml de catalyseur. Chacun des catalyseurs est sulfuré avant le test par un mélange gas-oil/DMDS jusqu'à 350°C. La pression totale est de 10 MPA, le débit d'hydrogène est de 1000 litres d'hydrogène gazeux par litre de charge injectée. la vitesse volumique horaire est de $1,25h^{-1}$.

On calcule également le taux de conversion en hydrodésulfuration à partir de la teneur en soufre (S) dans les effluents et en hydrodéazotation à partir de la teneur en azote dans les effluents (N) en appliquant les formules suivantes :

$$HDS\ (\%) = 100 \times (S°-S)/S°$$

$$HDN\ (\%) = 100\ x\ (N° - N)/N°$$

où S° et N° indiquent les concentrations initiales en soufre et en azote.

Les catalyseurs sont comparés sur la base de leurs performances moyennes stabilisées pendant les cent dernières heures de test à la température de 390°C. Cette comparaison est présentée dans le tableau 2 ci-après en terme de teneurs moyennes en soufre et en azote des cent dernières heures de test.

Tableau 2 :

| Performances catalytiques obtenues avec les catalyseurs A et C décrits dans les exemples 2 et 4. | | |
|---|---|---|
| Catalyseur | A | C |
| S (ppm poids) | 120 | 145 |
| N (ppm poids) | 45 | 80 |
| HDS (%) | 99,55 | 99,45 |
| HDN (%) | 96,4 | 93,6 |

L'utilisation d'une matrice à base de silico-gallo-phosphate permet d'améliorer d'une façon substancielle l'activité en hydrodéazotation puisqu'un gain de 2,8% en conversion est observé entre le catalyseur sans silico-gallo-phosphate (catalyseur C de l'exemple 4) et les catalyseurs en contenant (catalyseur A de l'exemple 2).

Exemple 7: Evaluation des catalyseurs B et D dans un test d'hydrodésulfuration à 5 MPa.

Les catalyseurs B et D dont les préparations sont décrites aux exemples précédents sont successivement utilisés dans les conditions de l'hydrodésulfuration sur une charge pétrolière de type distillat sous vide dont les principales caractéristiques sont les suivantes :

| | |
|---|---|
| point initial | 356°C |
| point 10% | 435°C |
| point 50% | 485°C |
| point 90% | 524°C |
| point final | 566°C |
| densité (20/4) | 0,924 |
| soufre (% poids) | 2,65 |
| azote (ppm poids) | 1250 |

L'unité de test catalytique comprend un réacteur en lit fixe, à circulation ascendante de la charge ("up-flow"), dans lequel est introduit 50 ml de catalyseur. Chacun des catalyseurs est sulfuré avant le test par un mélange gas-oil/DMDS jusqu'à 350°C. La pression totale est de 5 MPa, le débit d'hydrogène est de 350 litres d'hydrogène gazeux par litre de charge injectée, la vitesse volumique horaire est de $1,5h^{-1}$.

On calcule également le taux de conversion en hydrodésulfuration à partir de la teneur en soufre (S) dans les effluents et en hydrodéazotation à partir de la teneur en azote dans les effluents (N) en appliquant les formules suivantes :

$$HDS\ (\%) = 100\ x\ (S° - S)/S°$$

$$HDN\ (\%) = 100\ x\ (N° - N)/N°$$

S° et N° indiquant les concentrations initiales en soufre et en azote.

Les catalyseurs sont comparés sur la base de leurs performances moyennes stabilisées pendant les cent dernières heures de test à la température de 370°C. Cette comparaison est présentée en soufre et en azote des cent dernières heures de test.

Tableau 3 :

| Performances catalytiques obtenues avec les catalyseurs A et C décrits dans les exemples 2 et 4. | | |
|---|---|---|
| Catalyseur | B | D |
| S(ppm poids) | 2060 | 3421 |
| N(ppmpoids) | 705 | 778 |
| HDS (%) | 92,22 | 87,09 |
| HDN (%) | 43,6 | 37,76 |

L'utilisation d'une matrice à base de silico-gallo-phosphate permet d'améliorer d'une façon substancielle l'activité en hydrodésulfuration puisqu'un gain de 5,13% en conversion est observé entre le catalyseur sans silico-gallo-phosphate (catalyseur D de l'exemple 5) et les catalyseurs en contenant (catalyseur B de l'exemple 3).

## Revendications

1. Utilisation dans un procédé d'hydroraffinage d'une charge hydrocarbonée d'un catalyseur renfermant :

    a) de 20 à 95% en poids d'au moins une matrice

    b) de 1 à 60% en poids d'au moins un phosphate de gallium microporeux cristallisé éventuellement partiellement substitué par un élément X choisi dans le groupe formé par les éléments : Li, Be; Co, Mg, Mn, Zn, Al, B, Cr, Ge, Si, Ti, As, Fe et V, ledit phosphate de gallium ayant la formule générale approchée suivante :

$$R_r \, Ga_g P_p \, X_x \, O_2 \, F_f, \, h \, H_2O$$

    où la somme de g, p et x est égale à 1, et où :

    g est un nombre compris entre 0,3 et 0,5;
    p est un nombre compris entre 0,3 et 0,5,
    x est un nombre compris entre 0 et 0,4,
    r est un nombre compris entre 0,01 et 0,2,
    f est un nombre compris entre 0,01 et 0,2,
    h varie suivant le degré d'hydratation du solide entre 0 et 0,5,
    R est un composé organique, choisi dans le groupe formé par les amines cycliques,
    X est un hétéroatome choisi dans le groupe formé par les éléments : Li, Be, Co, Mg, Mn, Zn, Al, B, Cr, Fe, Ge, Si, Ti, As, et V,

    et étant caractérisé par un diagramme de diffraction des rayons X présenté dans le tableau 1.

    c) de 0 à 30% en poids d'au moins une zéolithe Y, de structure faujasite, soit sous forme hydrogène, soit sous forme au moins partiellement échangée avec des cations métalliques,

    d) de 0,1 à 30% en poids d'au moins un métal choisi parmi les métaux du groupe formé par les éléments du groupe VI et les éléments du groupe VIII.

    e) de 0 à 15% en poids d'au moins un élément choisi dans le groupe formé par P, Si, B et F.

2. Utilisation selon la revendication 1 d'un catalyseur tel que ladite matrice est choisie dans le groupe formé par l'alumine, la silice, la magnésie, l'argile, l'oxyde de titane, la zircone, les phosphates d'aluminium, de titane et de zirconium, les combinaisons de deux au moins de ces composés et les combinaisons alumine-oxyde de bore.

3. Utilisation selon l'une des revendications 1 ou 2 telle que R est la quinuclidine.

4. Utilisation selon l'une des revendications 1 à 3 telle que X est Si.

5. Utilisation selon l'une des revendications 1 à 4 où le métal des groupes VIII et VI est choisi dans le groupe formé par le cobalt, le nickel, le molybdène et le tungstène.

**Patentansprüche**

1. Verwendung eines Katalysators in einem Verfahren der Hydroraffinierung einer kohlenwasserstoffhaltigen Charge, umfassend:

a) 20 bis 95 Gew.% wenigstens einer Matrix

b) 1 bis 60 Gew.% wenigstens eines mikroporösen Galliumphosphats, das kristallisiert und gegebenenfalls partiell durch ein Element X substituiert ist, das gewählt ist aus der Gruppe, die durch die folgenden Elemente gebildet ist: Li, Be; Co, Mg, Mn, Zn, Al, B, Cr, Ge, Si, Ti, As, Fe und V, wobei das Galliumphosphat die angenäherte folgende allgemeine Formel hat:

$$R_r \, Ga_g P_p \, X_x \, O_2 \, F_f, \, h \, H_2O,$$

wo die Summe von g, p und x gleich 1 ist und wo:

g eine Zahl zwischen 0,3 und 0,5 ist,
p eine Zahl zwischen 0,3 und 0,5 ist,
x eine Zahl zwischen 0 und 0,4 ist,
r eine Zahl zwischen 0,01 und 0,2 ist und
f eine Zahl zwischen 0,01 und 0,2 ist,
h gemäß dem Hydratationsgrad des Feststoffs zwischen 0 und 0,5 variiert,
R eine organische Zusammensetzung, gewählt aus der durch die zyklischen Amine gebildeten Gruppe ist,
X ein Heteroatom, gewählt aus der durch die folgenden Elemente gebildeten Gruppe ist: Li, Be, Co, Mg, Mn, Zn, Al, B, Cr, Fe, Ge, Si, Ti, As und V,

und gekennzeichnet ist durch ein Röntgenstrahlenbeugungsdiagramm, wiedergegeben in Tafel 1

c) 0 bis 30 Gew.% wenigstens eines Y-Zeolith von Faujasit-Struktur entweder in der Wasserstofform oder in der Form von wenigstens partiellen Austausch mit metallischen Kationen ist.

d) 0,1 bis 30 Gew.% wenigstens eines Metalls ist, das gewählt ist aus den Metallen der Gruppe, die gebildet ist durch die Elemente der Gruppe VI und den Elementen der Gruppe VIII und

e) 0 bis 15 Gew.% wenigstens eines Elementes ist, das aus der durch P, Si, B und F gebildeten Gruppe gewählt ist.

2. Verwendung nach Anspruch 1 eines Katalysators der Art, daß diese Matrix gewählt ist aus der durch Aluminiumoxid, Siliciumoxid, Magnesiumoxid, Ton, Titanoxid, Zirkonoxid, den Phosphaten des Aluminiums, des Titans und des Zirkoniums, den Kombinationen wenigstens zweier dieser Zusammensetzungen und den Kombinationen Aluminiumoxid-Boroxid gebildeten Gruppe.

3. Verwendung eines der Ansprüche 1 oder 2, derart, daß R Chinuclidin ist.

4. Verwendung nach einem der Ansprüche 1 bis 3, derart, daß X gleich Si ist.

5. Verwendung nach einem der Ansprüche 1 bis 4, wo das Metall der Gruppen VIII und VI gewählt ist aus der durch Kobalt, Nikkel, Molybden und Wolfram gebildeten Gruppe.

**Claims**

1. In a process for hydrorefining a hydrocarbon feed, the use of a catalyst comprising:

a) 20% to 95% by weight of at least one matrix;

b) 1% to 60% by weight of at least one crystallised microporous gallium phosphate, optionally partially substituted with an element X selected from the group formed by the following elements: Li, Be, Co, Mg, Mn, Zn, Al, B, Cr, Ge, Si, Ti, As, Fe and V, said gallium phosphate having the following approximate general formula:

$$R_r Ga_g P_p X_x O_2 F_f, hH_2O$$

where the sum of g, p and x equals 1, and where:

g is a number in the range 0.3 to 0.5;
p is a number in the range 0.3 to 0.5;
x is a number in the range 0 to 0.4;
r is a number in the range 0.01 to 0.2;
f is a number in the range 0.01 to 0.2;
h is in the range 0 to 0.5, depending on the degree of hydration of the solid;
R is an organic compound selected from the group formed by cyclic amines;
X is a heteroatom selected from the group formed by the following elements: Li, Be, Co, Mg, Mn, Zn, Al, B, Cr, Fe, Ge, Si, Ti, As and V;

and the catalyst being characterized by the X ray diffraction diagram shown in Table 1;
c) 0 to 30% by weight of at least one Y zeolite with a faujasite structure, either in its hydrogen form or in a form which is at least partially exchanged with metal cations;
d) 0.1% to 30% by weight of at least one metal selected from metals from the group formed by the elements from group VI and the elements from group VIII;
e) 0 to 15% by weight of at least one element selected from the group formed by P, Si, B and F.

2. Use according to claim 1 of a catalyst in which said matrix is selected from the group formed by alumina, silica, magnesia, clay, titanium oxide, zirconia, aluminium, titanium and zirconium phosphates, combinations of at least two of said compounds and alumina-boron oxide combinations.

3. Use according to claim 1 or claim 2, in which R is quinuclidine.

4. Use according to any one of claims 1 to 3, in which X is Si.

5. Use according to any one of claims 1 to 4, in which the metal from groups VIII and VI is selected from the group formed by cobalt, nickel, molybdenum and tungsten.